# EUROPEAN PATENT SPECIFICATION

(11) **EP 2 370 690 B1**
(45) Date of publication and mention of the grant of the patent: **21.08.2019**
(21) Application number: 08875774.5
(22) Date of filing: 10.12.2008
(51) Int. Cl.: F03B 13/18, F03B 13/10

(54) **SYSTEM FOR CONVERSION OF AQUATIC WAVE ENERGY INTO ELECTRICAL ENERGY**
SYSTEM ZUR UMWANDLUNG VON WASSERWELLENENERGIE IN ELEKTRISCHE ENERGIE
SYSTEME DE CONVERSION D'ENERGIE HOULOMOTRICE EN ENERGIE ELECTRIQUE

(43) Date of publication of application: 05.10.2011
(73) Proprietor: Dragic, Mile, Zrenjanin 23000 (RS)
(72) Inventor: Dragic, Mile, Zrenjanin 23000 (RS)
(74) Representative: Paton, David William
(86) International application number: PCT/IB2008/003418
(87) International publication number: WO 2010/067137

(56) References cited:
- FR-A- 490 041
- FR-A- 538 736
- FR-A1- 2 392 174
- GB-A- 2 027 815
- GB-A- 2 056 574
- US-A- 639 734
- US-A- 1 816 044
- US-A- 1 823 190
- US-A- 3 567 953
- US-A- 4 184 336
- US-A- 4 364 715
- US-A- 4 539 484
- US-A- 5 842 838

## Description

### BACKGROUND

The present disclosure relates, generally, to the utilization of energy from aquatic waves and converting the wave energy into electrical energy. More particularly, the present disclosure relates to a system that utilizes the linear motion of waves to generate electricity.

### TECHNICAL FIELD TO WHICH THE DISCLOSURE RELATES

The present disclosure relates, generally, to the mechanical engineering field, and in more detailed approach it is an operating system with fluids, i.e. a system of mechanical parts and units which enable accurate operation of engines or facilities.

### TECHNICAL PROBLEM

The present disclosure solves the problem of designing the shape of a floating body and the conversion periodical, variable, and linear motion of an input shaft, moved by the floating body, into one-way rotation of an output shaft in order to achieve a higher degree of wave energy utilization. A floating body connected to a vertical shaft moves vertically upwardly and downwardly in response to wave motion. When the vertical shaft is equipped with linear gear teeth used to rotate a gear, the gear moves in one rotational direction when the floating body moves upwardly with the wave and in another rotational direction when the floating body moves downwardly in a second rotational direction. Constant change of rotational direction of the gear (clockwise/ counterclockwise direction), causes constant change of rotational direction of the generator shaft. This oscillating arrangement is not ideal for making electricity.

### TECHNICAL CONDITIONS

Today wave energy is not used for production of electrical energy, except experimentally. Power plants are limited by the amount of available fossil fuels used to power turbines, which make them one of the biggest environmental pollutants. Nuclear power plants are large energy sources but they can be very dangerous if they get damaged (Chernobyl and some plants in the USA, for example). By emitting large amounts of water vapor into atmosphere they increase global pollution. There is also a very serious problem with nuclear waste disposal.

Alternatively, electricity is produced in electric plants built on rivers and lake dams. However, the construction of these plants is complex and expensive. Coastal countries cannot use this source for electricity production. The only solution for these countries is utilization of aquatic wave energy. Previous attempts of utilization of aquatic wave energy for electricity production have not succeeded due to some particular disadvantages and have never been put into practice.

In patent no. P-2007/0346 consumption of aquatic wave energy is much more rationalized, but it still has a very small utilization ratio. Namely, in the case of an inflexible transmission shaft, the power from movement in two directions is not utilized. Instead, there is an idle motion when the floating body is moving downwardly towards the water. The floating body shown was designed to engage insufficient area of the wave, and the floating body repels from the wave.

US 4,364,715 describes an apparatus for harvesting wave energy. The apparatus includes a vertical pivot track having a pivot attached to a top surface of a pontoon.

### SUMMARY

The present disclosure is directed to an energy generation system with design innovations, which enable higher efficiency in wave energy utilization. A device, without any parts secured to the sea bed of the body of water was constructed. The invention provides a system for the conversion of aquatic wave energy of water into electrical energy as defined in claim 1. Preferred embodiments of the invention are defined in the dependent claims.

Since there are various kinds of waves which differ in size, strength, frequency, for example, a few different versions of the systems were designed in order to obtain higher wave energy utilization. By using a smaller floating body mass it is possible to get larger mass of displaced fluid, i.e. a higher operative turning moment. The shape of the body itself provides better adhesion of the floating body to the wave and better compensation of changes in wave frequency.

A higher degree of wave energy utilization is achieved by these changes, and wave energy can be used without any parts fixed to the sea bed of the body of water.

Additional features of the disclosure will become apparent to those skilled in the art upon consideration of the following detailed description of illustrative embodiments exemplifying the best mode of carrying out the disclosure as presently perceived.

### BRIEF DISCRIPTION OF THE DRAWINGS

The present invention and the advantages thereof will become more apparent upon consideration of the following detailed description when taken in conjunction with the accompanying drawings of which:
Fig. 1 shows a longitudinal cross section of the constant rotation mechanism used for keeping constant rotating direction of the output shaft;
Fig. 1a is a schematic display of the constant rotation mechanism of Fig. 1;
Fig. 1b is an isometric display of the constant rotation mechanism of Fig. 1;
Fig. 1c shows the front view of the constant rotation mechanism of Fig. 1;
Fig. 1d is a cross section of A-A of Fig.1c;
Fig. 1e is a cross section of B-B of Fig.1c;
Fig. 2 is a schematic display of the constant rotation mechanism for keeping output shaft rotating constantly in a single direction while the input shaft is alternating between clockwise and counterclockwise rotation;
Fig. 3 is a schematic display of another embodiment of the constant rotation mechanism showing the constant rotation direction of the output shaft and showing two input shafts rotating clockwise and counterclockwise;
Fig. 4 is a schematic display of a first embodiment of a floating body in longitudinal cross section;
Fig. 4a is a cross-sectional view of the first embodiment of the floating body;
Fig. 5 is an isometric view of a second embodiment of the floating body shape;
Fig. 5a is a cross sectional view taken along line 5a, -5a of Fig. 5 showing the second version of the floating body;
Fig. 5b is a cross sectional view taken along line 5b-5b of Fig. 5 showing the second version of the floating body;
Fig. 6 shows another embodiment of the energy generating system showing a floating body and flexible transmission shafts coupled to the top and to the bottom of the floating body;
Fig. 6a is a cross sectional view of the floating body;
Fig. 7 shows the energy generating system with the mechanism for conversion of electrical energy placed between the inflexible body and the multiplier;
Fig 7a is a schematic display of the cross section of the floating body; and
Fig. 8 is a schematic and isometric view of the energy generating system floating on the water surface.

### DETAILED DESCRIPTION

While the present disclosure may be susceptible to embodiments in different forms, they are shown in the drawings, and herein will be described in detail, embodiments with the understanding that the present description is to be considered an exemplification of the principles of the disclosure and is not intended to limit the disclosure to the details of construction and the arrangement of components set forth in the following description or illustrated in the drawings.

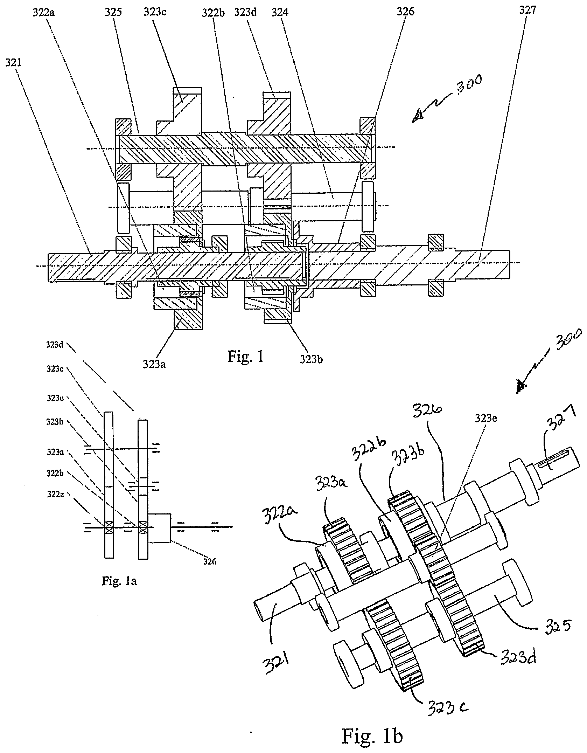

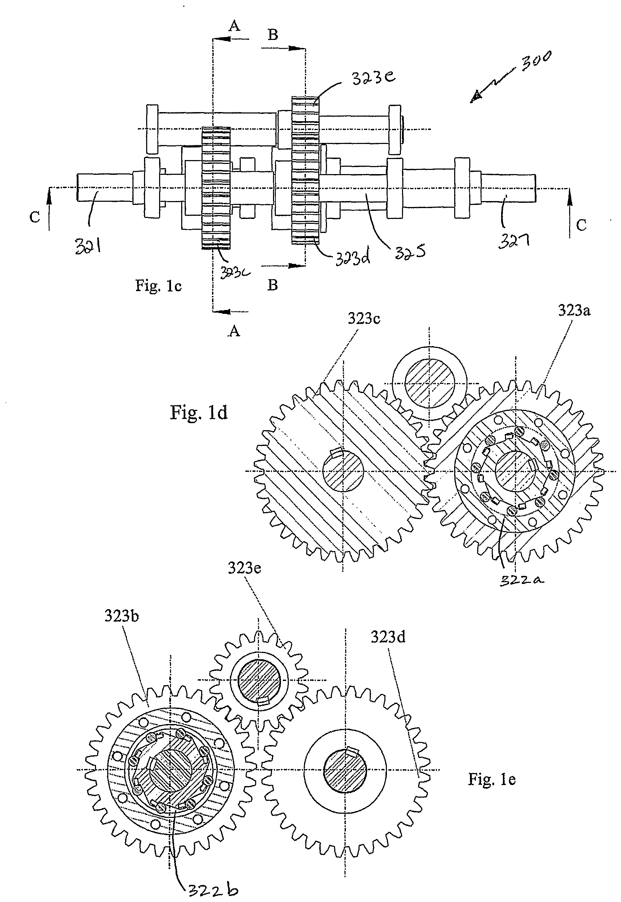

Figure 1 of the present disclosure shows a constant rotation mechanism 300 for rotation direction alteration used to convert periodical variable rotational motion created by, the inflexible transmission shaft 26 at the input shaft 321, into one-way rotation of the output shaft 327. The output shaft 327, in its basic embodiment, is co-axial with the input shaft 321. The input shaft 321 transmits clockwise rotation, to clutch 322b, to the output shaft 327 of constant rotation mechanism 300. The characteristic of this embodiment is that both one-way clutches 322a and 322b are placed at the input shaft 321 and they operate as a pair. In this case, one-way clutch 322a is in idle motion and it does not transmit the turning moment.

In the case when the inflexible transmission shaft 26 moves downwardly towards the water, i.e. when the input shaft 321 rotates in counter-clockwise direction, one-way clutch 322a transmits the turning moment to gear 323a, and over to gear 323c on countershaft 325 and to gear 323d, to idler gear 323e, which converts the rotating direction together with the gear 323b. Gear 323b transmits the turning moment further to the output shaft 327 of the constant rotation mechanism 300 over coupling 326. The turning moment is transmitted further to the multiplier 17 and generator 20. While rotating in this direction, the one-way clutch 322b does not transmit the turning moment, but is idle. Inflexible transmission shaft includes lath teeth that extend along the length of the inflexible transmission shaft. The lath teeth mesh with a gear 27 to rotate input shaft 321 a of constant rotation mechanism.

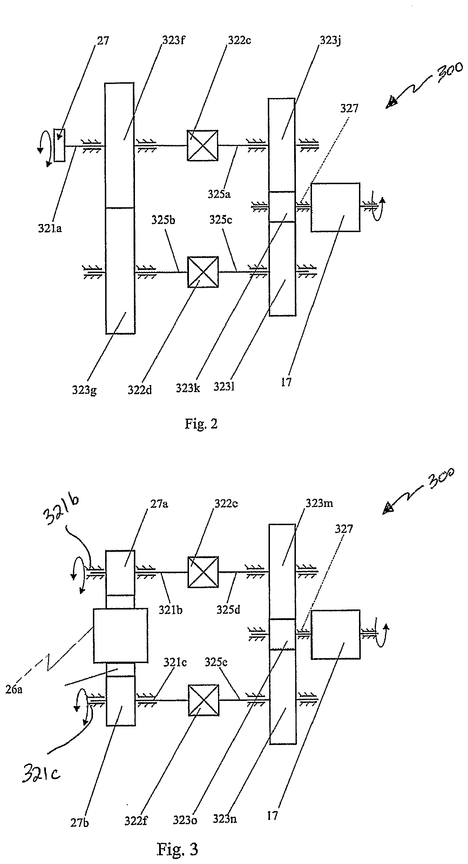

Another embodiment of the constant rotation mechanism 300 is shown in Fig. 2. In this embodiment, the input shaft 321a and the output shaft 327 are parallel, and one-way clutches 322c and 322d are on different shafts. Gear 27 is tightly coupled to one end of the input shaft 321a, and one-way clutch 322c is tightly coupled to the other end of the input shaft 321a. Gear 323f is coupled to gear 323g which is firmly attached to shaft 325b at one end. One-way clutch 322d is firmly attached at the other end of shaft 325b. One end of the shaft 325a is firmly coupled to the housing of the one-way clutch 322c, and gear 323j is firmly attached to the other end of the shaft 325a. One end of shaft 325c is tightly connected to the housing of the one-way clutch 322d, while gear 323 1 is tightly connected to the other end of shaft 325c. Gears 323j and 323 1 are joined together by means of an idler gear 323k which is tightly connected to the output shaft 327 of the mechanism 300. Both embodiments convert two direction rotational movement into one directional rotational movement. Without this arrangement the electric generator would reverse its rotation every time the inflexible shaft would go up and then down.

Turning moment is transmitted to the input shaft 321a over gear 27, and when it rotates in the direction which is transmitted by the one-way clutch 322c, the turning moment is transmitted to gear 323j over shaft 325a, and further over gear 323k to output shaft 327. The clutch 322d in this case is idle, and it does not transmit the turning moment. When it rotates in the direction which is transmitted by one-way clutch 322d, turning moment is transmitted from the input shaft 321a, over coupled gears 323f and 323g, to shaft 325b and clutch 322d. Clutch 322d transmits the turning moment to shaft 325c. Shaft 325c, over coupled gears 323 1 and 323k, transmits the turning moment to the output shaft 327.

Fig.3 shows another embodiment of the constant rotation mechanism 300 where an inflexible transmission shaft 26a with two parallel operating sides (in this version gear racks) is used as a drive. The shaft 26a has opposing vertical lath teeth that extend the length of the shaft. The mechanism has two parallel input shafts 321b and 321c. Gear 27a is firmly attached to one end of the shaft 321b, and one-way clutch 322e is attached to the other end. Gear 27b is firmly connected to one end of the shaft 321c, and one-way clutch 322f is attached to the other end. The one-way clutch housing 322e is tightly connected to one end of the shaft 325d, and gear 323m is coupled to the other end. The one-way clutch housing 322f is connected to one end of shaft 325e, and gear 323n is tightly connected to the other end. Gears 323m and 323n are coupled to the idler gear 323o which is attached to the output shaft 327.

Turning moment at the input shafts 321b and 321c is obtained by vertical motion in a first direct (i.e. "up") of the inflexible transmission shaft 26a to gear 27a, and over one-way clutch 322e. From clutch 322e power is transmitted to shaft 325d, and further, over gears 323m and 323n, to the output shaft 327. In this case, the one-way clutch 322f is idle. When transmission shaft 26a moves in a second direction (i.e. "down") the turning moment is transmitted to gear 27b over one-way clutch 322f, from the input shaft 321c to shaft 325e, to gear 323n and over idler gear 323o to output shaft 327. During movement of the transmission shaft 26a in the second direction one-way clutch 322e is idle. In this embodiment, the number of gears in the mechanism is reduced, and as the result of this reduction, the initial moments of the constant rotation mechanism 300 are decreased as well.

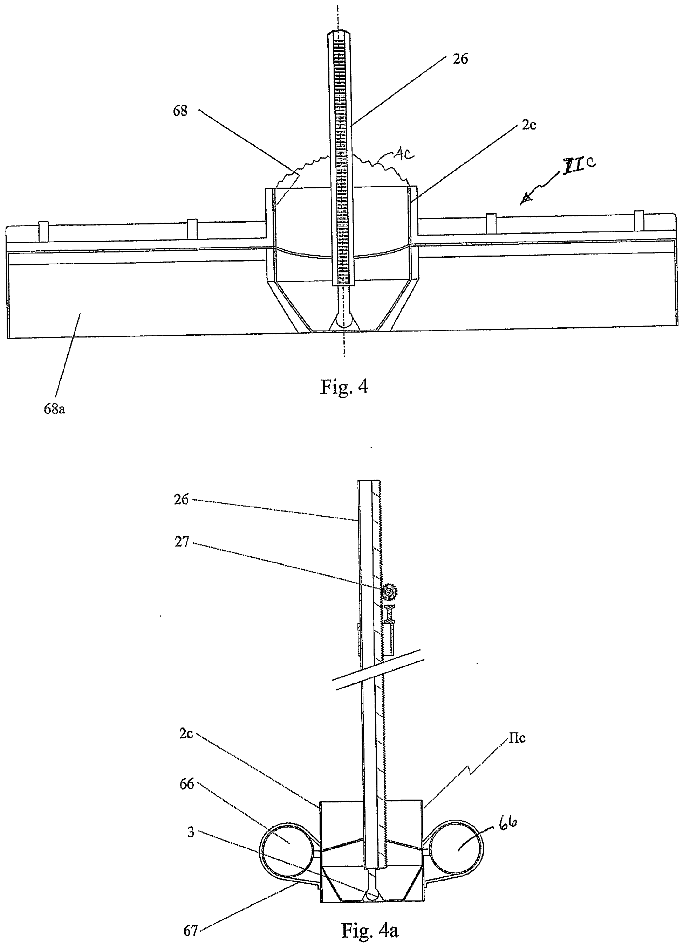

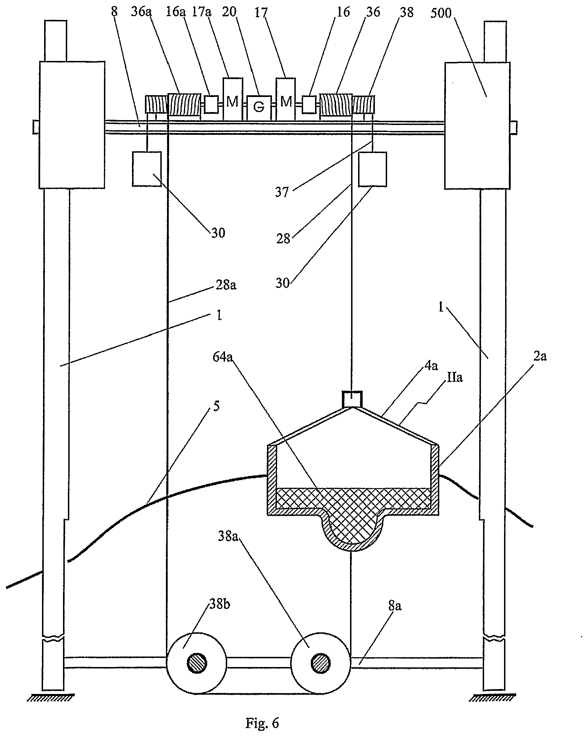

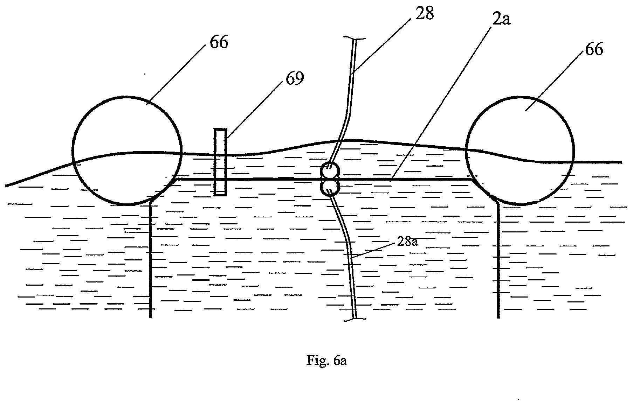

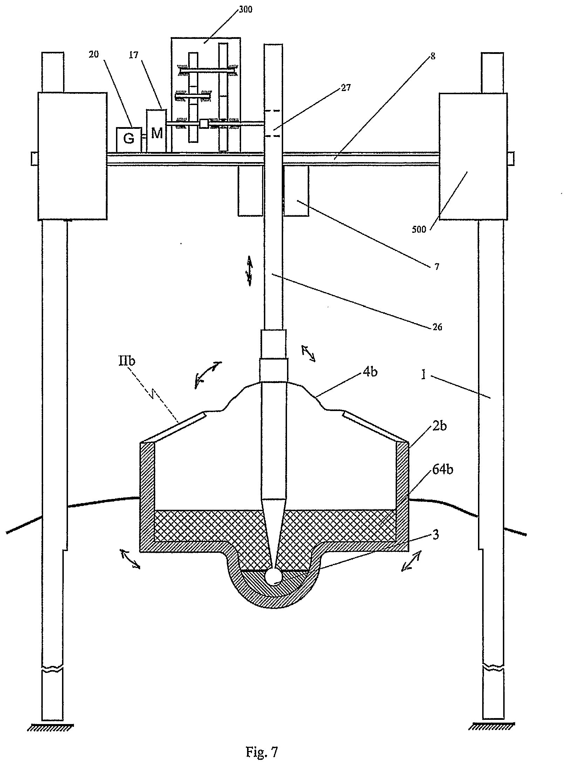

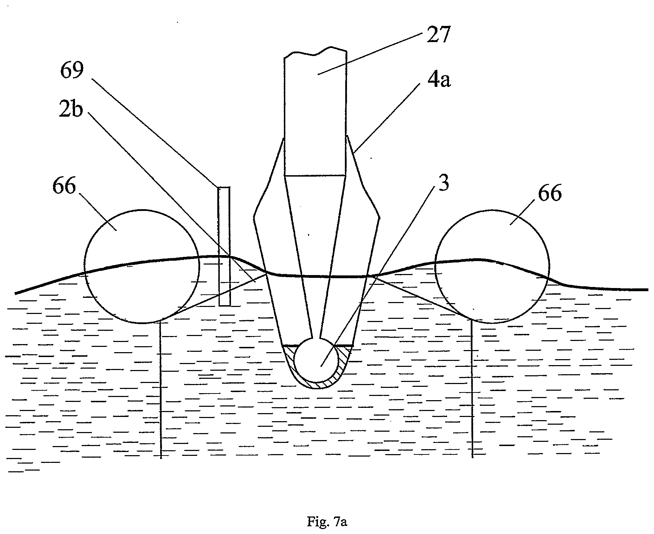

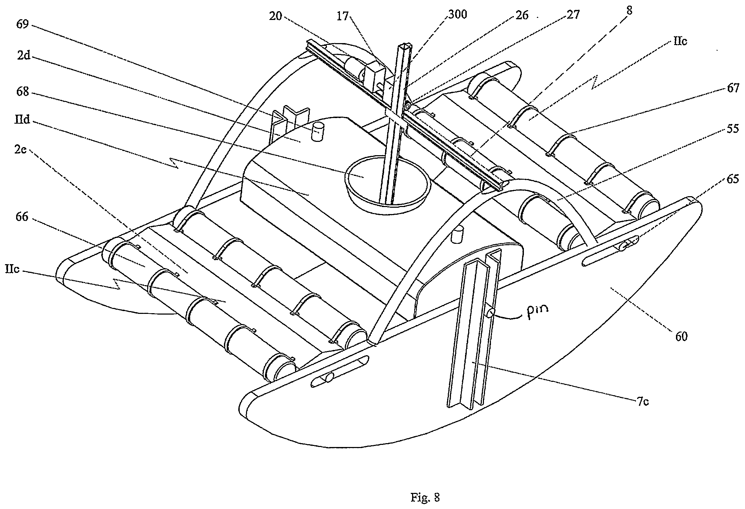

Fig.4 and Fig. 8 show different embodiments of floating bodies IIa, IIb, IIc and IId. Floating bodies IIa, IIb and IIc are a combination of inflexible bases 2a, 2b and 2c and floats 66 as shown in Figs. 6, 6a, 7 & 7a.

Fig.4 and Fig. 4a show floating body IIc that is in the shape of a prism and is coupled to inflexible transmission shaft 26. Floating body IIc consists of a base 2c in the shape of a prism, with floats 66 tightly tied to its lateral sides. The floats 66 are tied by means of a profile 67 which allows floating body IIc to float. In the central upper part is a cylindrical part 68 as shown in Fig. 4. Inflexible transmission shaft 26 with pivoting joint 3 is connected to cylindrical part 68. Basically, the prismatic shape of the floating body IIc resulted from the feature that the longer side of the prism is always parallel to the wave front. This feature is explained by the rule that the friction forces in the boundary layer, at a body obstruction, are stronger at the longer side of the prism if it is positioned vertically to the wave front and those forces cause the floating body to rotate.

### (Law of nature)

The base 2c has prismatic shape, similar to an open box in which the open side faces the water to ensure the creation of a sub-pressure inside cavity 68a while floating body IIc floats. This sub-pressure is needed for achieving lower oscillation amplitude of the floating body IIc, and by means of small mass of the floating body IIc, producing sufficiently strong force in the inflexible transmission shaft 26 to create greater vertical movement during its motion towards the water surface. This is achieved by adding water volume captured inside the base 2c to the mass of the base 2c. Water trapped in base 2c creates a vacuum effect, pulling the floating body IIc during downward movement of the wave. This reduces the overall mass of the floating body IIc allowing the body to easily rise with the wave. The central part 68 of the base IIc is cylindrical enabling the floating body IIc to rotate with respect to inflexible transmission shaft 26 that is attached to the base 2c over spherical joint 3. Flexible cover 4a is placed on the central part 68 of the base 2c. The cover does not obstruct rotation and prevents water from entering the central part 68. Floating body IIc is designed for higher and longer waves 5.

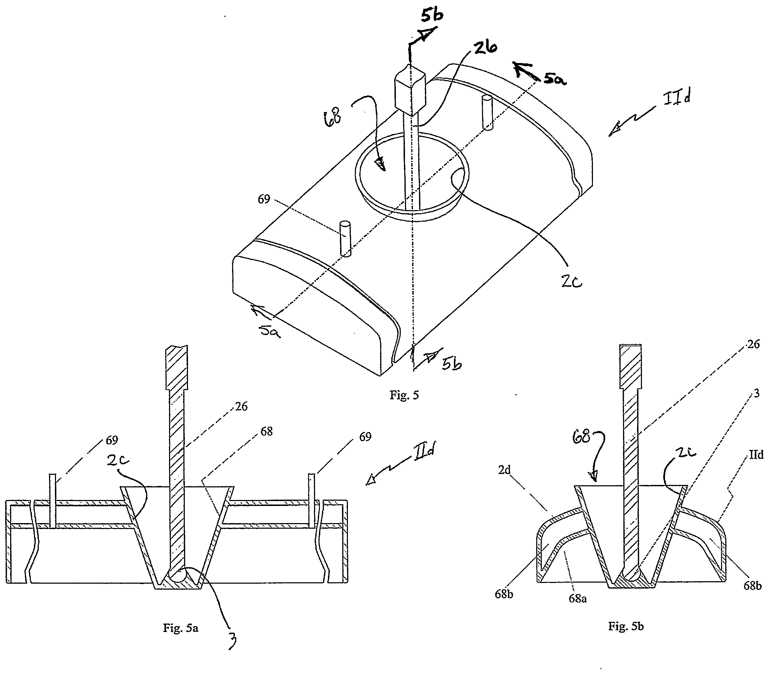

Fig.5, Fig.5a and Fig.5b show floating body IId with the base 2c in the shape of a prism. One-way valves 69 are built in the upper side of the floating body IId. In the central upper side of the body is a cavity 68. Inflexible transmission shaft 26 with spherical joint 3 is connected to the base 2c. Bottom side of the floating body IId has a cavity 68a along the entire length of the floating body IId. The cavity 68a goes to the shorter, lateral sides that are closed along the entire height of the floating body IId.

Chambers 68b inside the floating body lid provide navigability and buoyancy of the floating body IId. One-way valves 69 release air captured below the floating body into atmosphere, and water fills that space and thus, enlarges the mass of the floating body IId. The wave particles captured inside the cavity 68a move upwards vertically, increase the stability of the floating body IId, and together with enlarged mass of the floating body, increase turning moment at the generator 20 shaft. Floating body IId is designed for higher and longer waves 5. Again, water within cavity 68a creates a suction force to pull body IId downwardly during downward movement of the wave.

Fig. 6 shows floating body IIa with base 2a coupled to the pulley 36 by a flexible transmission shaft 28 wound up on the pulley 36. The base 2a is connected to the operative pulley 36a by a flexible transmission shaft 28a, over mid-pulleys 38a and 38b. The flexible transmission shaft 28a is wound up on the operative pulley 36a. Counter-weights 30 are used to maintain continuous tension of the flexible transmission shafts 28 and 28a. Pulleys 38a and 38b are tightly and in the rotary mode (they are allowed to rotate), attached to the supporting beam 8a. Generator 20, multipliers 17 and 17a, one-way clutches 16 and 16a and pulleys 36 and 36a are firmly attached to the supporting beam 8. Supporting beam 8 is attached to mechanisms 500 that enable supporting beam 8 to move vertically along columns 1 to compensate for the tides.

When wave 5 lifts floating body IIa, flexible transmission shaft 28a transmits motion over mid-pulleys 38a and 38b to pulley 36a that rotates due to unwinding of the flexible transmission shaft 28a. Rotation of the pulley 36 transmits turning moment, over one-way clutch 16a and multiplier 17a, to the generator 20. When the floating body IIa moves towards water driven by unwinding of flexible transmission shaft 28, then pulley 36 rotates and, over one-way clutch 16 and multiplier 17, transmits turning moment to the generator 20. By alternating operation of clutches 16 and 16a, generator shaft 20 always rotates in the same direction, no matter from which side it gets its drive. The floating body IIa is designed for lower and shorter waves 5.

Fig.6a is a cross section of floating body IIa showing the way of positioning of one-way valves 69.The one-way valves 66 are used for releasing of air from the chamber of the body. The removal of the air allows the wave to pull the body downwardly during downward movement of the floating body. Fig 6a also shows the base of the floating body which is, in this case, submerged.

Fig.7 shows floating body IIb coupled to the constant rotation mechanism 300 by means of an inflexible transmission shaft 26 having gear teeth, a guide 7 and a gear 27. Output shaft of the constant rotation mechanism 300 is coupled to generator 20 over multiplier 17. In this embodiment, working stroke is achieved when the floating body moves upwards together with the wave, and also when it moves in the opposite direction. This is possible due to use of constant rotation mechanism 300.

Mechanism 300 together with multiplier 17 and generator 20 is rigidly attached to beam 8, and beam 8 is connected to columns 1 over mechanism 500. Height adjustment mechanism 500 is built in systems for conversion of wave energy into electrical energy in the areas with considerable difference between high and low tide in order to reduce the length of inflexible transmission shaft 26. Floating body IIb is designed for lower and shorter waves 5.

Fig.7a shows cross sectional display of floating body IIb that is completely under surface of the water. This embodiment can be achieved due to one-way valves 69 used for releasing of the air and positioned below the base of the floating body 2b. A flexible cover 4a is coupled to floating body IIa in order to enable inflexible shaft 26 to pivot and, at the same time, to prevent water from getting into the central part 68.

Fig. 8 shows another embodiment of the device which differs from previously described embodiments - it is not secured to the bed of the body of water, but freely floats on the water surface and generates electrical energy from the relative difference between wave amplitudes. The system can consist of floating bodies IIb, IIc, IId or it can be a combination of these floating bodies. Floating body IId is connected to inflexible transmission shaft 26, and is placed in the central part. Floating bodies IIc are attached to both lateral sides of floating body IId, tightly and in rotary and sliding modes, and the tight, rotary and sliding connection is achieved by side supports 60, which may or may not be achieved by longitudinal guides 65. If there are not guides 65, then the distance between floating bodies IIc is fixed. In this embodiment, the supporting beam 8 is firmly attached to the spherical supports 55 which are coupled to lateral supports 60.

Floating body IId, in the central part, is attached to the side supports 60, in rotary and sliding mode, over vertical guides 7c. The guides 7c allow vertical motion of the floating body IId. This device uses above mentioned feature to take position where longer side of the floating body is always parallel to the wave front. As the wave approaches floating body IIc, the wave and the floating body rise simultaneously, and at the same time, central floating body IId sinks together with the wave. This kind of motion results in inflexible transmission 26 initiation, which transmits turning moment further to generator 20, over gear 27, mechanism 300 and multiplier 17. Depending on the wave frequency, it is possible to adjust the distance between floating body IId and floating bodies IIc.

The system for aquatic wave energy transmission from floating body IIa, IIb, IIc and IId to mechanism 300 can be carried out either by an inflexible transmission shaft 26 or inflexible transmission shaft 28.

While embodiments have been illustrated and described in the drawings and foregoing description, such illustrations and descriptions are considered to be exemplary and not restrictive in character, it being understood that only illustrative embodiments have been shown and described and that all changes and modifications that come within the scope of the appended claims are desired to be protected. The applicants have provided description and figures which are intended as illustrations of embodiments of the disclosure, and are not intended to be construed as containing or implying limitation of the disclosure to those embodiments. There are a plurality of advantages of the present disclosure arising from various features set forth in the description. It will be noted that alternative embodiments of the disclosure may not include all of the features described yet still benefit from at least some of the advantages of such features. Those of ordinary skill in the art may readily devise their own implementations of the disclosure and associated methods, without undue experimentation, that incorporate one or more of the features of the disclosure and fall within the scope of the appended claims.

## Claims

1. A system for the conversion of aquatic wave energy of water into electrical energy comprising:
a floating body (IIb, IIc, IId) adapted to float in water;
a transmission member (26) pivotally coupled to the floating body (IIb, IIc, IId), the transmission member (26) adapted to move generally linearly in response to upward and downward movement of the floating body (IIb, IIc, IId);
conversion means (300) for converting the generally linear movement of the transmission member (26) into rotational movement; and
a generator (20) for converting the rotational movement of the conversion means (300) into electricity,
**characterised in that** the transmission member (26) is pivotally coupled to the floating body (IIb, IIc, IId) at a point (3) below the center of gravity of the floating body (IIb, IIc, IId),
wherein the conversion means includes a constant rotation mechanism (300) and a multiplier (17) to convert two direction linear movement into one direction rotational movement,
wherein the transmission member (26) includes lath teeth (26) that are adapted to engage the teeth of an input (27) gear, and
wherein the input gear (27) is coupled to two one-way clutches (16, 16a) and an idler (323o) to convert two-directional rotational energy into one-direction rotational energy.

2. The system of claim 1, wherein the floating body includes a closed chamber (68b) and an open chamber (68a), the open chamber (68a) having a mouth opening in a downwardly direction into the water.

3. The system of claim 2, further including purge means (69) for purging air from the open chamber (68a) to allow the open chamber (68a) to become generally filled with water during use.

4. The system of claim 1, wherein the floating body includes a base (2c) in the shape of a prism.

5. The system of claim 4, furthering including floats (66) tied by a profile (67) to lateral sides of the base (2c).

6. The system of claim 5, further including a central part (68) with the transmission member (26) connected to the cylindrical part (68) at a joint (3).

7. The system of claim 6, wherein water trapped in the base (2c) creates a vacuum effect, pulling the floating body (IIc) during downward movement of a wave.

8. The system of claim 6, wherein the central part (68) is cylindrical to allow rotation of the floating body (IIc) with respect to the transmission member (26).

## Patentansprüche

1. System zur Umwandlung von Wasserwellenenergie in elektrische Energie, umfassend:
einen Schwimmkörper (IIb, IIc, IId), der in Wasser schwimmen kann;
ein Übertragungselement (26), das mit dem Schwimmkörper (IIb, IIc, IId) schwenkbar verbunden ist, wobei das Übertragungselement (26) ausgebildet ist für eine allgemein lineare Bewegung in Reaktion auf eine Aufwärts- und Abwärtsbewegung des Schwimmkörpers (IIb, IIc, IId);
eine Umwandlungseinrichtung (300) zum Umwandeln der allgemein linearen Bewegung des Übertragungselements (26) in eine Drehbewegung; und
einen Generator (20) zum Umwandeln der Drehbewegung der Umwandlungseinrichtung (300) in Elektrizität,
**dadurch gekennzeichnet, dass** das Übertragungsmittel (26) an einem Punkt (3) unterhalb des Schwerpunkts des Schwimmkörpers (IIb, IIc, IId) mit dem Schwimmkörper (IIb, IIc, IId) schwenkbar verbunden ist,
wobei die Umwandlungseinrichtung einen Konstantdrehmechanismus (300) und einen Multiplizierer (17) zum Umwandeln einer Zweirichtungs-Linearbewegung in eine Einrichtungs-Drehbewegung umfasst,
wobei das Übertragungselement (26) Lattenzähne (26) aufweist, die ausgebildet sind für einen Eingriff mit den Zähnen eines Eingangszahnrads (27) und
wobei das Eingangszahnrad (27) mit zwei Einwegkupplungen (16, 16a) und mit einer Leitrolle (323o) verbunden ist, um eine Zweirichtungs-Drehenergie in eine Einrichtungs-Drehenergie umzuwandeln.

2. System nach Anspruch 1, wobei der Schwimmkörper eine geschlossene Kammer (68b) und eine offene Kammer (68a) hat, wobei die offene Kammer (68) eine Mündungsöffnung in Richtung nach unten in das Wasser aufweist.

3. System nach Anspruch 2, ferner umfassend Entlüftungsmittel (69) zum Leeren von Luft aus der offenen Kammer (68a), so dass sich die offene Kammer (68a) im Betrieb generell mit Wasser füllen kann.

4. System nach Anspruch 1, wobei der Schwimmkörper eine Basis (2c) in Form eines Prismas hat.

5. System nach Anspruch 4, ferner umfassend Auftriebskörper (66), die durch ein Profil (57) mit den lateralen Seiten der Basis (2c) verbunden sind.

6. System nach Anspruch 5, ferner umfassend ein Mittelteil (68), wobei das Übertragungselement (26) an einem Gelenk (3) mit dem zylindrischen Teil (68) verbunden ist.

7. System nach Anspruch 6, wobei in der Basis (2c) eingeschlossenes Wasser eine Vakuumwirkung erzeugt, die während einer Abwärtsbewegung einer Welle auf den Schwimmkörper (IIc) einen Sog ausübt.

8. System nach Anspruch 6, wobei das Mittelteil (68) zylindrisch ist, um eine Drehung des Schwimmkörpers (IIc) bezüglich des Übertragungselements (26) zu ermöglichen.

## Revendications

1. Système permettant de convertir l'énergie houlomotrice en énergie électrique comprenant :
un corps flottant (IIb, IIc, IId) susceptible de flotter dans l'eau,
un élément de transmission (26) couplé de manière pivotante au corps flottant (IIb, IIc, IId), l'élément de transmission (26) étant susceptible de se déplacer essentiellement linéairement en réponse au mouvement vers le haut et vers le bas du corps flottant (IIb, IIc, IId),
des moyens de conversion (300) permettant de convertir le mouvement essentiellement linéaire de l'élément de transmission (26) en un mouvement de rotation, et
un générateur (20) permettant de convertir le mouvement de rotation des moyens de conversion (300) en électricité,
**caractérisé en ce que**
l'élément de transmission (26) est couplé de manière pivotante au corps flottant (IIb, IIc, IId) au niveau d'un point (3) situé au-dessous du centre de gravité du corps flottant (IIb, IIc,IId),
les moyens de conversion comprenant un mécanisme en rotation constante (300) et un multiplicateur (17) permettant de convertir un mouvement linéaire bidirectionnel en un mouvement de rotation unidirectionnel,
l'élément de transmission (26) comprenant des dents de lame (26) qui sont susceptibles de venir en prise avec les dents d'un engrenage d'entrée (27), et
l'engrenage d'entrée (27) étant couplé à deux embrayages unidirectionnels (16 16a), et à un pignon (323o) pour transformer l'énergie de rotation bidirectionnelle en une énergie de rotation unidirectionnelle.

2. Système conforme à la revendication 1,
dans lequel le corps flottant comprend une chambre fermée (68b) et une chambre ouverte (68a), la chambre ouverte (68a) ayant une embouchure s'ouvrant vers le bas dans l'eau.

3. Système conforme à la revendication 2,
comprenant en outre des moyens de purge (69) permettant de purger l'air de la chambre ouverte (68a) pour permettre à cette chambre ouverte (68a) d'être essentiellement remplie d'eau en cours d'utilisation.

4. Système conforme à la revendication 1,
dans lequel le corps flottant comprend une base (2c) en forme de prisme.

5. Système conforme à la revendication 4,
comprenant en outre des flotteurs (66) liés par un profilé (67) aux côtés latéraux de la base (2c).

6. Système conforme à la revendication 5,
comprenant en outre une partie centrale (68), l'élément de transmission (26) étant relié à la partie cylindrique (68) au niveau d'un joint (3).

7. Système conforme à la revendication 6,
dans lequel l'eau piégée dans la base (2c) crée un effet de vide poussant le corps flottant (IIe) au cours du mouvement vers le bas d'une vague.

8. Système conforme à la revendication 6,
dans lequel la partie centrale (68) est cylindrique pour permettre la rotation du corps flottant (IIe) par rapport à l'élément de transmission (26).
